Europäisches Patentamt

European Patent Office

Office européen des brevets

(11) Veröffentlichungsnummer: **0 340 478 B1**

# EUROPÄISCHE PATENTSCHRIFT

(45) Veröffentlichungstag der Patentschrift: **28.10.92**

(51) Int. Cl.5: **F16K 31/08**, F16K 31/10

(21) Anmeldenummer: **89106251.5**

(22) Anmeldetag: **08.04.89**

(54) Pneumatisches Ventil zur Steuerung von Druckluftströmen.

(30) Priorität: **16.04.88 DE 3812769**

(43) Veröffentlichungstag der Anmeldung:
**08.11.89 Patentblatt 89/45**

(45) Bekanntmachung des Hinweises auf die
Patenterteilung:
**28.10.92 Patentblatt 92/44**

(84) Benannte Vertragsstaaten:
**AT BE CH FR GB IT LI NL SE**

(56) Entgegenhaltungen:
**DE-A- 2 326 085**
**DE-A- 2 443 687**
**US-A- 4 046 061**

(73) Patentinhaber: **HENGSTLER GMBH**
**Uhlandstrasse 49**
**W-7209 Aldingen(DE)**

(72) Erfinder: **Helbig, Roland**
**Wagnerstrasse 21**
**W-7218 Trossingen(DE)**
Erfinder: **Trittler, Karl**
**Kantstrasse 28**
**W-7209 Aldingen(DE)**

(74) Vertreter: **Hubbuch, Helmut, Dipl.-Ing et al**
**Patentanwälte Dr. Rudolf Bauer Dipl.-Ing.**
**Helmut Hubbuch Dipl.-Phys. Ulrich Twelmeier Westliche Karl-Friedrich-Strasse 29-31**
**W-7530 Pforzheim(DE)**

EP 0 340 478 B1

## Beschreibung

Die Erfindung bezieht sich auf ein pneumatisches Ventil zur Steuerung von Druckluftströmen mit berührungsloser Ansteuerung.

Es ist bekannt, wenn man im Bereich der Pneumatik von einem Arbeitskolben ein Signal abgeleitet werden soll, hierzu von einem vorzugsweise feststehenden Zylinder auszugehen, welcher dabei aus einem nichtmagnetischen Material und am Kolben befindlichen Permanentmagnet besteht, weil dabei weniger mechanische Probleme zu bewältigen sind, und damit Readröhren und andere auf ein Magnetfeld reagierende Sensoren angesteuert werden. Soll hierbei ein weiteres Pneumatikventil, das im Druckbereich von 1 bis 8 bar arbeitet, angesteuert werden, so muß ein magnetisch betätigter, pneumatischer Signalgeber eingesetzt werden, mit dem das lastschaltende Pneumatikventil angesteuert wird. Dabei ist nachteilig, daß für den Sensor eine eigene Luftversorgung mit einem Druck von 0,25 bar benötigt wird und diese Luftversorgung einen hohen Reinheitsgrad aufweisen muß, da sonst die kleinen Düsen bei den geringen Drücken leicht verstopfen. Hinzu kommmt, daß die bekannten Pneumatiksensoren schockempfindlich sind und einen dauernden Luftverbrauch von ca. 2 l/min. haben. So ist ein pneumatisches Ventil zur Steuerung von Druckluftströmen mit berührungsloser Ansteuerung nach der DE-OS 23 26 085 bekannt, wobei ein verschwenkbar gelagerter Einfach- oder Doppelhebel ein- oder beidseits der Schwenkachse mit einem Dauermagneten bestückt ist und mittels zuführbarem ferromagnetischen oder magnetischen Schaltteil über einen Stößel das Verschließen und Öffnen einer Steuerdüse bewirkt.

Es ist nun Aufgabe der Erfindung ein pneumatisches Ventil zu schaffen, das berührungslos angesteuert wird und hohe Arbeitsdrücke ohne Zwischenverstärker schalten kann.

Zur Lösung dieser Aufgabe kennzeichnet sich daspneumatische Ventil nach dem Oberbegriff von Anspruch 1 dadurch, daß die Steuerung des Druckluftstromes über den Arbeitskolben erfolgt, der einerseits mit einer größeren Dichtkolbenfläche von der Steuerdüse beaufschlagbar ist und andererseits mit einer kleineren Kolbenfläche durch eine Federwirkung und/oder durch den Arbeitsluftdruck beaufschlagbar ist, so daß die kleinere Kolbenfläche gegen Federwirkung und/oder Arbeitsluftdruck gesteuert wird. Hierdruch wird ein Ventil geschaffen, welches die berührungslose Sensorfunktion, die Verstärkerfunktion und das Arbeitsventil mit Funktionsanzeige in einer Baugruppe vereinigt und keine zusätzliche Steuerluftversorgung benötigt.

Bei Anordnung von Dauermagneten beidseits der Schwenkachse sind diese vorzugsweise über ein Magnetjoch verbunden, gegenpolig angeordnet, so daß ein außerhalb des Ventilkörpers zuführbarer Magnet als Schaltteil den einen Dauermagneten auf dem Doppelhebel anzieht und den anderen abstößt, wobei der Schaltmagnet als Kolben in einem antimagnetischen Zylinder anordenbar ist.

Eine bevorzugte Ausführungsform des Ventils gemäß der Erfindung ist beispielsweise in der Zeichnung dargestellt und nachfolgend beschrieben und zwar zeigen:

Fig. 1    eine Draufsicht auf die Gesamtanordnung mit Schnitt durch das Arbeitsventil,

Fig. 2    eine Seitenansicht hierzu mit Schnitt durch die Steuerdüse mit Hebelbetätigung und Funktionsanzeige,

Fig. 3    eine Rückansicht mit Schnitt durch die Hebelbetätigung und Schaltmagnet.

Wie aus der Zeichnung ersichtlich wird, ist in einem Grundkörper 1 sowohl eine Steuerdüse 2 mit Hebelschaltung als Hebelarm bzw. als Doppelhebel 3 und der Steuerkolben 4 mit Arbeitskolben 5 sowie eine Funktionsanzeige 6 vorgesehen.

Die Steuerdüse 2 wird bei abgehobenem Betätigungsstößel 7 über die geöffnete Dichtung 8 von 9 aus als Abzweigung der Hauptleitung 10 mit Druckluft versorgt, wobei diese bei Öffnung der Steuerdüse 2 über den Verbindungskanal 11 zum Steuerkolben 4 zur Betätigung des Arbeitskolbens 5 und damit Freigabe der Druckluft der Hauptleitung 10 an den Ausgangsstutzen 12 geführt wird.

Zur Betätigung der Steuerdüse 2 ist der Hebelarm, hier als Doppelhebel 3 vorgesehen, welcher beidseits seiner Schwenkachse 13 jeweils mit einem Dauermagneten 14 und 15 bestückt ist und bei zur Sensorfläche 16 zuführbaren Schaltmagneten 17 durch Verschwenken des Doppelhebels 3 den Stößel 7 zum Verschließen bzw. Öffnen der Steuerdüse 2 bewegt. Anstelle von zwei Magneten 14 und 15 kann auch nur einer, z.B. an einem Hebelarm vorgesehen werden, wobei sodann die Zustellung über den Schaltmagneten 17 und die Rückstellung vermittels Federzug erfolgen kann.

Die beiden Dauermagneten 14 und 15 sind beidseits der Schwenkachse 13 hier über ein Magnetjoch 18 verbunden und entsprechend gegenpolig angeordnet.

Somit wird durch außerhalb vom Ventilkörper (Grundkörper 1) zuführbaren Magneten 17, welcher beispielsweise als Kolben in einem antimagnetischen Zylinder angeordnet sein kann, als Schaltteil die Öffnung bzw. Schließung der Düse 2 bewirkt. Hiermit wird die Druckluft über 11 zum Steuerkolben 4 geleitet, welcher eine größere Dichtkolbenfläche aufweist, als der über den Schaft 19 verbundene Arbeitskolben 5 mit kleinerer Kolbenfläche, welcher damit gegen Federwirkung 20 geöffnet wird und die Druckluft P von der Hauptleitung 10 zum Ausgangsstutzen 12 freigibt, wo diese sodann als Arbeitsluft A zur Verfügung steht.

Als Funktionsanzeige 6 dient schließlich ein Kolben 23, welcher bei über die Leitung 24 anliegenden Arbeitsdruck A gegen die Feder 25 ausfährt und so die Ventilfunktion anzeigt.

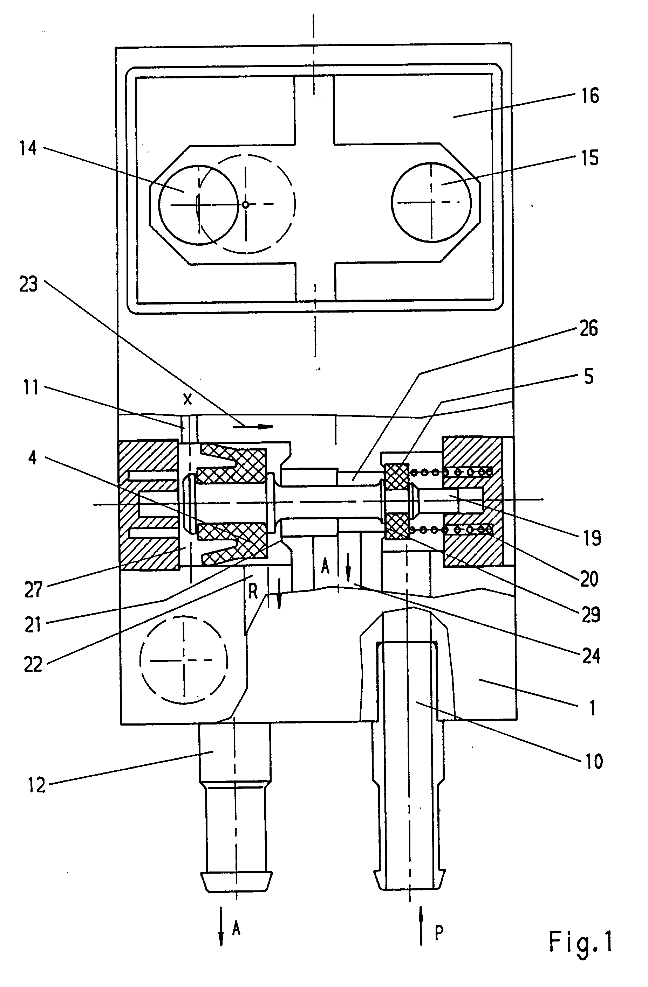

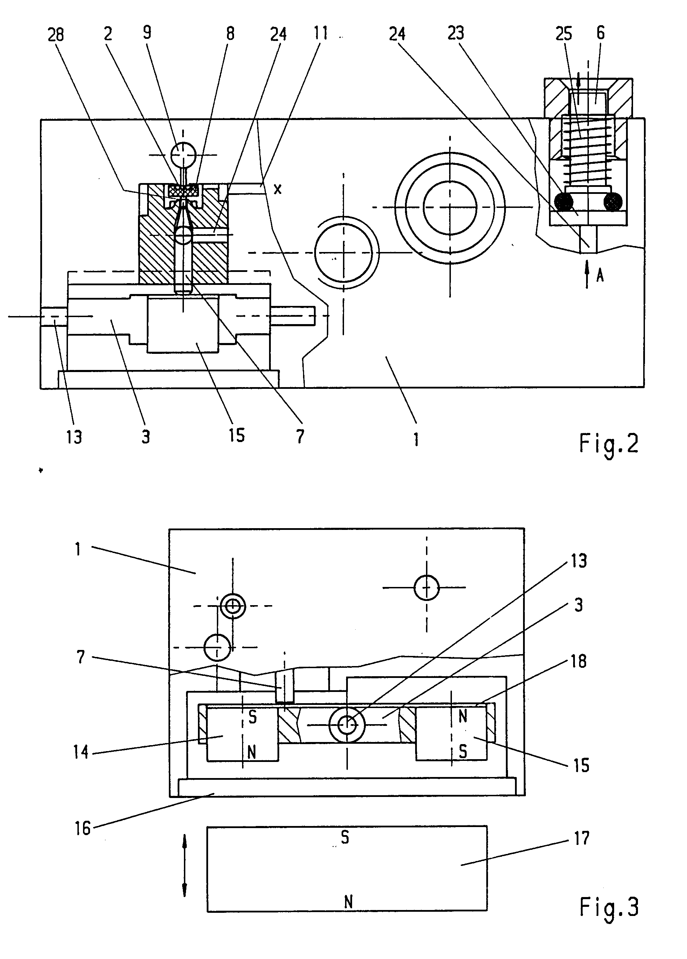

In der Ruhestellung, wie sie in Fig. 1 bis 3 dargestellt ist, wird der Raum 26 hinter dem Steuerkolben 4 durch den Kanal 22 ins Freie entlüftet. Der Zylinderraum 27 entlüftet sich durch den Verbindungskanal 11, vorbei an der Dichtung 8 durch die Öffnung 24 in der Atmosphäre.

Erfolgt ein Arbeitshub, welcher nicht gezeigt ist, wird die Entlüftung von 27 mittels der Dichtung 8 am Bund 28 verschlossen, der Steuerkolben 4 bewegt sich in Richtung des Pfeiles 23 und verschließt an der Ringfläche 21 die Entlüftung, welche in den Kanal 22 mündet. Somit kann der Luftstrom P vorbei am Ventilsitz 29 durch den Kanal 24 zum Ausgang A strömen.

**Patentansprüche**

1. Pneumatisches Ventil zur Steuerung von Druckluftströmen mit berührungsloser Ansteuerung, wobei ein verschwenkbar gelagerter Einfach- oder Doppelhebel (3) ein- oder beidseits der Schwenkachse (13) mit einem Dauermagneten (14, 15) bestückt ist und mittels zufürbarem ferromagnetischen oder magnetischen Schaltteil (17) über einen Stößel (7) das Verschließen und Öffnen einer Steuerdüse (2) bewirkt, dadurch gekennzeichnet, daß die Steuerung des Druckluftstroms über einen Arbeitskolben (5) erfolgt, der einerseits mit einer größeren Dichtkolbenfläche (bei 4) von der Steuerdüse (2) beaufschlagbar ist und andererseits mit einer kleineren Kolbenfläche (bei 5) durch eine Federwirkung (20) und/oder durch den Arbeitsluftdruck beaufschlagbar ist, so daß die kleinere Kolbenfläche (bei 5) gegen Federwirkung und/oder Arbeitsluftdruck gesteuert wird.

2. Pneumatisches Ventil nach Anspruch 1, dadurch gekennzeichnet, daß bei Dauermagneten (14, 15) beidseits der Schwenkachse (13) diese vorzugsweise über ein Magnetjoch (18) verbunden, gegenpolig angeordnet sind, so daß ein außerhalb des Ventilkörpers zuführbarer Magnet (17) als Schaltteil den einen Dauermagneten (14, 15) auf dem Doppelhebel (3) anzieht und den anderen abstößt, wobei der Schaltmagnet (17) als Kolben in einem antimagnetischen Zylinder anordenbar ist.

3. Pneumatisches Ventil nach Anspruch 1 oder 2, dadurch gekennzeichnet, daß bei über einen Schaft verbundenen einerseits größeren Dichtkolben (bei 4) für die Beaufschlagung durch den Steuerluftdruck und andererseits vorgesehenen kleineren Arbeitsluft-Steuerkolben (bei 5) für die Arbeitsdruckluft (A) jeweils nach Durchlaß- oder Verschlußstellung für die Arbeitsdruckluft (A) der Entlüftungsstutzen vom großen Dichtkolben (bei 4) bzw. der Arbeitsdruckstutzen vom kleineren Steuerkolben (bei 5) freigegeben ist.

4. Pneumatisches Ventil nach einem der Ansprüche 1 bis 3, dadurch gekennzeichnet, daß die Steuerdüse (2) und ein Lastventil vom gleichen Preßluftanschluß versorgt werden.

5. Pneumatisches Ventil nach einem der vorhergehenden Ansprüche, dadurch gekennzeichnet, daß die Steuerdüse (2) mit der Hebelschaltung und der Steuerkolben (bei 5) mit dem Arbeitskolben (bei 4) als Lastventil in einem gemeinsamen Grundkörper (1) aufgenommen sind.

6. Pneumatisches Ventil nach einem der vorhergehenden Ansprüche, dadurch gekennzeichnet, daß ein Kolben bei anliegendem Arbeitsdruck (A) gegen Federwirkung (25) als Funktionsanzeige (6) ausfahrbar ist.

**Claims**

1. A pneumatic valve for controlling compressed air streams in response to a non-contacting actuation, wherein a pivoted single or double lever (3) is provided on one side or both sides of its pivot (13) with a permanent magnet (14, 15) and by means of a feedable ferromagnetic or magnetic actuating member (17) and a plunger (7) causes a pilot nozzle (2) to be closed and opened, characterized in that the compressed air stream is controlled by means of a working piston (5), which is adapted to be subjected to pressure from the pilot nozzle (2) on a larger sealing piston surface (at 4) at one end and is adapted to be subjected to the action of a spring (20) or and/or to the working air pressure on a smaller piston surface (at 5) at the other end so that the smaller piston surface (at 5) is controlled against spring action and/or the working air pressure.

2. A pneumatic valve according to claim 1, characterized in that any permanent magnets (14, 15) provided on both sides of the pivot (13) are preferably connected by a magnetic yoke (18) and arranged with their poles in opposition so that a magnet (17) serving as an actuating member and feedable outside the valve member attracts one of the permanent magnets (14, 15) on the double lever (3) and repels the other, and the actuating magnet (17) is adapted to be arranged as a piston in an antimagnetic cylinder.

**3.** A pneumatic valve according to claim 1 or 2, characterized in that a sealing piston (at 4) is provided at one end and is connected by a shaft and is adapted to be subjected by the pilot air pressure and a smaller working air control piston (at 5) for the working air pressure (A) is provided at the other end and whenever one of the positions for permitting the flow of and for shutting off the working compressed air has been assumed the venting port is exposed by the large sealing piston (at 4) and the port for the working compressed air is exposed by the smaller pilot piston (at 5).

**4.** A pneumatic valve according to any of claims 1 to 3, characterized in that the pilot nozzle (2) and a load valve are supplied from the same compressed air port.

**5.** A pneumatic valve according to any of the preceding claims, characterized in that the pilot nozzle (2), the actuating levers, the pilot piston (at 5) and the working piston (at 4) as a load valve are accommodated in a common body (1).

**6.** A pneumatic valve according to any of the preceding claims, characterized in that one piston subjected to the working pressure (A) is adapted to be extended against the action of a spring (25) to provide a function indicator (6).

**Revendications**

**1.** Vanne pneumatique pour la commande de courant d'air comprimé, comprenant une commande sans contact, un levier simple ou double (3) monté de manière pivotante étant équipé d'un côté ou sur les deux côtés de l'axe de pivotement (13) d'un aimant permanent (14, 15) et provoquant au moyen d'un élément de commutation ferromagnétique ou magnétique (17) déplaçable, par l'intermédiaire d'un poussoir (7), la fermeture et l'ouverture d'une tuyère de commande (2), **caractérisée en ce** que la commande du courant d'air comprimé est réalisée par l'intermédiaire d'un piston de travail (5) qui peut être sollicité d'une part avec une surface de piston étanche plus grande (en 4) par la tuyère de commande (2) et, d'autre part, avec une surface de piston plus petite (en 5) par un effet de ressort (20) et/ou par la pression d'air de travail, de manière que la surface de piston plus petite (en 5) est commandée contre l'effet de ressort et/ou la pression d'air de travail.

**2.** Vanne pneumatique selon la revendication 1, caractérisée en ce que pour des aimants permanents (14, 15) disposés de part et d'autre de l'axe de pivotement (13), lesdits aimants permanents, reliés de préférence par une culasse magnétique (18), sont installés à polarité opposée, de sorte qu'un aimant (17) qui peut être amené à l'extérieur du corps de vanne, attire en tant qu'élément de commutation l'un des aimants permanents (14, 15) sur le levier double (3) et repousse l'autre, l'aimant de commutation (17) pouvant être disposé en tant que piston dans un cylindre antimagnétique.

**3.** Vanne pneumatique selon l'une des revendications 1 ou 2, caractérisée en ce que, d'une part pour un piston étanche plus grand (en 4) pour la sollicitation par la pression d'air de commande et d'autre part pour un piston de commande d'air de travail prévu plus petit (en 5) pour l'air comprimé de travail (A), couplés par l'intermédiaire d'une tige, la tubulure d'évacuation est libérée par le grand piston étanche (en 4) ou la tubulure de pression de travail par le piston de commande plus petit (en 5), selon la position de passage ou d'obturation pour l'air comprimé de travail (A).

**4.** Vanne pneumatique selon l'une des revendications 1 à 3, caractérisée en ce que la tuyère de commande (2) et une soupape de charge sont alimentées par le même raccordement d'air comprimé.

**5.** Vanne pneumatique selon l'une des revendications précédentes, caractérisée en ce que la tuyère de commande (2) avec la commande par levier et le piston de commande (en 5) avec le piston de travail (en 4) sont logés en tant que soupape de charge dans un corps de base commun (1).

**6.** Vanne pneumatique selon l'une des revendications précédentes, caractérisée en ce que, sous l'action de la pression de travail (A), un piston peut être sorti contre l'action du ressort (25) comme indicateur de fonctionnement (6).

Fig.1

Fig.2

Fig.3